(19) Europäisches Patentamt
European Patent Office
Office européen des brevets

(11) Publication number: **0 116 988**
**A1**

(12) # EUROPEAN PATENT APPLICATION

(21) Application number: 84200135.6

(22) Date of filing: 02.02.84

(51) Int. Cl.$^3$: C 02 F 1/52
C 01 B 25/238, C 22 B 3/00
C 22 B 60/02

(30) Priority: 05.02.83 NL 8300447

(43) Date of publication of application: 29.08.84 Bulletin 84/35

(84) Designated Contracting States: AT BE DE FR GB IT NL SE

(71) Applicant: UNIE VAN KUNSTMESTFABRIEKEN B.V.
Maliebaan 81
NL-3581 CG Utrecht(NL)

(72) Inventor: Van Duijn, Simon
Pieter Bedijnstraat 6
NL-2202 VK Noordwijk(NL)

(72) Inventor: Durville, Paulus Franciscus Maria
Spreeuwenstraat 9
NL-2623 GV Delft(NL)

(72) Inventor: Van Rosmalen, Gerda Maria
Grabijnhof 1
NL-2625 LL Delft(NL)

(74) Representative: Roeffen, Wilhelmus Johannes Maria et al,
OCTROOIBUREAU DSM Postbus 9
NL-6160 MA Geleen(NL)

(54) **Process for removing heavy metals from aqueous media.**

(57) Heavy metals, particularly cadmium, are removed from very acid and hot monocalcium phosphate digestion liquors by adding an aromatic or heterocyclic dithiocarbamate, preferably in the form of a solid alkaline earth metal salt, and separating off the organic heavy metal complex formed.

So it is possible to produce virtually heavy metals free monocalcium phosphate solutions, which can be converted to purified phosphoric acid and purified calcium sulphate.

EP 0 116 988 A1

Croydon Printing Company Ltd.

Unie van Kunstmestfabrieken B.V.



# PROCESS FOR REMOVING HEAVY METALS FROM AQUEOUS MEDIA

The invention relates to a process for removing heavy metals, particularly cadmium, from acid, phosphate-containing, aqueous media by adding to these a sulphur-containing compound and separating off the heavy metal compound formed.

Such a process is known for removing cadmium and other heavy metals from wet-process phosphoric acid, in which process the sulphur-containing compound added is an inorganic sulphide and the insoluble heavy metal sulphide formed is separated off. This process is described, for instance, in the Japanese patent applications 53/110.997, 53/75.196, 50/75.115 and 54/67.597, as well as in the International (PCT) patent application 80.02418.

A disadvantage of this known process is that, in consequence of the low concentration of heavy metals in the solution, the growth is only extremely slow, and that, in consequence of the low rate of growth of very poorly soluble sulphides, a colloidal precipitate is formed that is hard to be separated off. Moreover, in applying these processes the toxic and ill-smelling hydrogen sulphide will be formed.

Another disadvantage of the processes mentioned, which occurs in a wet-process phosphoric acid process, is that the problem of the extremely toxic heavy metals is eliminated only partly. The fact is that the portion of the heavy metals incorporated in the calcium sulphate obtained as byproduct in such a process is not removed by applying these known processes. As known in the art, the content of toxic heavy metals in this calcium sulphate constitutes a serious obstacle for the discharge or storage of the calcium sulphate, and certainly for the technical use thereof, for instance in the building industry.

The invention now provides a process in which the said disadvantages are wholly or substantially eliminated.

This is achieved according to the invention in that the heavy metals are removed from a monocalcium phosphate solution having a pH $< 1$, having a temperature of between 60 and 145 °C, a $P_2O_5$ content of 28-52 % (wt) and a CaO content of 3-5.5 % (wt) obtained by dissolving phosphate rock in an excess of wet-process phosphoric acid, by adding to

said monocalcium phosphate solution a dithiocarbamate having the general formula:

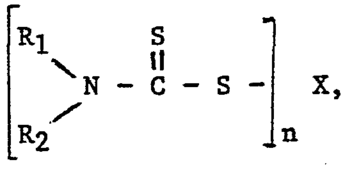

where $R_1$ and $R_2$ represent the same or different, substituted or non-substituted aromatic or heterocyclic rings, or where $R_1$ and $R_2$ form part of a ring structure together with nitrogen, X represents hydrogen, ammonium, an alkali metal or an alkaline earth metal, and n is either 1 or 2, corresponding with the valency of X, said dithiocarbamate being added in a quantity of 1-25 gram moles per gram atom of heavy metals present in said monocalcium phosphate solution, and separating off the organic heavy metal complex formed.

It has been found that in this way it is possible for the heavy metals present in the digestion liquor to be substantially separated off, so that, in further processing this liquor to form phosphoric acid, a purified calcium compound is obtained in addition to a purified phosphoric acid.

Although the present process could in principle be applied to any liquor obtained by treating phosphate rock with a strong mineral acid, such as $HNO_3$, HCl and/or $H_3PO_4$, the process is directed to treat a monocalcium phosphate solution obtained by dissolving phosphate rock with an excess of wet-process phosphoric acid. Such a solution can advantageously be processed to form phosphoric acid by adding concentrated sulphuric acid to it and separating the precipitated calcium sulphate from the phosphoric acid solution formed. Preference is given to subsequently returning part of this phosphoric acid solution for dissolving phosphate rock.

As such a monocalcium phosphate solution has a certain heavy metal content, for instance 2-20 ppm Cd, > 3 ppm Cu, about 20 ppm Ti and varying quantities of Pb, Hg and As, a phosphoric acid and a calcium sulphate contaminated with heavy metals are normally obtained in further processing.

Although in principle it seems possible to treat such a monocalcium phosphate solution with an inorganic sulphide in order thus to

precipitate the heavy metals present as insoluble sulphides, this has been found in practice not to be feasible. When dissolving phosphate rock in an excess of phosphoric acid, a very high temperature must be applied, generally 60-145 °C, more specifically 75-125 °C, in order to obtain an acceptable CaO content of the final monocalcium phosphate solution. In this process a very acid solution results (pH $<$ 1), with a high temperature (60-145 °C, specifically 75-125 °C), having a high $P_2O_5$ content (28-52 % (wt), specifically 42-47 % (wt) and a high CaO content (3-5.5 % (wt)). It has been found that in such extreme conditions no precipitate of heavy metal sulphides is formed, but a colloidal sulphide extremely difficult to be separated off. Moreover, there is an intensified formation of $H_2S$. In the present invention, in which a specific dithiocarbamate is used as a heavy metal binding agent, the said formation of colloid and $H_2S$ does not occur, not even in the said hot, acid environment of a monocalcium phosphate solution.

The dithiocarbamates used in the present process are known and can be prepared on the basis of the corresponding amines and carbon disulphide, see for instance 'Methoden der Organischen Chemie' (Houben-Weyl), 4th edition, volume IX (1955), pages 823-827.

In the present process the dithiocarbamates can be used in the $H^+$ form and as ammonium- or alkali- or alkaline earth metal salt. As in the said synthesis applied the dithiocarbamates can be easily obtained as alkali metal salts, particularly sodium salt, advantageously an alkali metal-, particularly sodium dithiocarbamate may be used. As it however appeared that the alkali metal salts are easily oxidised to the inactive disulphides so that often an oxidation ratarder has to be added, preference is given to use the less oxidation-sensitive alkaline earth metal salts, particularly the calcium and barium salts.

In the present process various dithiocarbamates can be used. An example of a compound in which $R_1$ and $R_2$ form a ring structure is N-pyrrolidinedithiocarbamate.
An example of a compound in which $R_1$ and $R_2$, represent heterocyclic rings is dipyridyl dithiocarbamate.

It has been found that dialkyl- and dicycloalkyl dithiocarbamates do indeed show a good binding capacity for heavy metals, but at higher temperatures they will decompose while metal sulphides are being split off, so that is has become impossible to recover the compound used

originally. Therefore, in the present process where the solution to be treated has a very high temperature, no dialkyl- or dicycloalkyl dithiocarbamates can be used.

It has been found that dithiocarbamates in which both hydrocarbyl groups represent an aromatic hydrocarbon ring are so stable that even at the extremely high temperatures and very low pH of a monocalciumphosphate solution there will be no decomposition. Preference is therefore given, in the present process, to using a dithiocarbamate in which both hydrocarbyl groups represent an aromatic group. Examples of such groups include phenyl, benzyl, toluyl and naphthyl, which may or may not be substituted, for instance with one or more alkyl-, amino-, nitro-, nitroso-, carboxyl-, hydroxyl-, mercapto- and/or sulphoric acid groups. The dithiocarbamate used is preferably N,N-diphenyldithiocarbamate, because this has been found to be very stable, to show a very high bonding capacity for heavy metals and to be capable, moreover, of being synthesized in a fairly simple manner.

The quantity of dithiocarbamate to be added may in principle vary, but depends, of course, on the quantity of heavy metals in the solution to be treated. The dithiocarbamate is generally used in a molar excess in respect of the heavy metals present (Cd, Pb, As, Cu, Ti, Hg, U, Y, rare earth metals). Particularly 2-6 gram moles dithiocarbamate are used per gram atom heavy metals present. The dithiocarbamates can be used in the form of a solution, e.g. with a concentration of between about 0,5 to 10 % (wt), or in solid form.

It has been found that in the process according to the invention, especially when a solution of a dithiocarbamate is used, the organic heavy metal complexes formed do not precipitate completely, but will partly remain in solution in consequence of the extremely acid environment and the high temperature.

According to one mode of realizing the process according to the invention, these complexes are precipitated by adding to the liquor subjected to the treatment one or more organic metal complexes, which will result in a coprecipitate of heavy metal complex and the metal complex added. Examples of suitable metal complexes are dithiocarbamates of copper, titanium, vanadium and zinc. Optionally, these complexes may be formed in situ from the metals present in the digestion liquor or added thereto and dithiocarbamate. Another possibility is, after the

separation, to return part of the cadmium complex formed. Copper-diphenyldithiocarbamate has been found to be a particularly suitable coprecipitating agent.

The quantity of coprecipitating agent may vary within wide limits, for instance 2 ppm or more calculated in respect of the digestion liquor to be treated.

According to another mode of realization, the heavy metal complex is precipitated by adding an organic ligand to the liquor subjected to the treatment. Examples of suitable organic ligands are substituted or non-substituted diphenyldithiooxalates.
Preference is given to use a polymeric dithiooxalate as organic ligand. It has been found that for this purpose particularly suitable are dithio-oxalate polymers having the general formula:

$$(-S-\overset{O}{\overset{\|}{C}}-\overset{O}{\overset{\|}{C}}-S-)_n,$$

where n represents a whole number higher than or equalling 3.

The quantity of organic ligand to be added is not critical. Generally 10-40 % (wt) calculated in respect of the dithiocarbamate is applied.

According to a third mode of realization the heavy metal complex is precipitated by converting it into the corresponding insoluble thiuramdisulphide complex. This conversion can be effected by adding an oxidizing agent, for instance potassiumpermanganate, to the liquor subjected to the treatment.

It has been found that a heavy metal complex precipitate can be obtained directly by adding the dithiocarbamate to the liquor in solid form. This addition of solid dithiocarbamate can be effected in ore or more, for instance in three, steps. Preferably the solid dithiocarbamate is added in a plurality of steps and the precipitate formed is separated off after each step before the next addition of dithiocarbamate taking place. It has been further found that an even greater part of the cadmium present can be removed if an inorganic anion generating compound is added too to the monocalcium phosphate solution. Preferably said compound is added to the solution before the addition of the dithiocarbamate. Examples of suitable inorganic compounds are metalbromides, iodides, sulphites, thiosulphates and sulphamates.

The precipitate thus obtained can be separated from the liquor

in various ways, for instance by decantation, filtration, centrifugation. Preference is given to separate the precipitated metal complex off by means of a pressure filter.

The complex thus separated off can be carried off as such. However, it is possible also for the dithiocarbamates used to be recovered from this complex, for instance by suspending the complex in a polar solvent, for instance water, and subsequently extracting it with an organic solvent, such as toluene, benzene or xylene, in which process the heavy metal stays behind in the polar phase and the dithiocarbamate passes into the organic phase. From this the dithiocarbamate can be recovered, for instance by evaporation. The dithiocarbamate thus recovered can subsequently be used again as complexing agent for heavy metals.

The invention wil be further elucidated in the following examples without, however, being restricted thereto.

Example I

Experiment 1

At a temperature of about 80 °C 3 ml of a 1 % (wt) aqueous solution of sodium diphenyldithiocarbamate was added, during stirring, to 20 ml of a monocalcium phosphate solution with a $P_2O_5$ content of 47 % (wt), a pH of 1 and a Cd content of 20 ppm. This sodium diphenyldithiocarbamate had been obtained according to the process described in example IA.

A polarographic analysis revealed that practically all cadmium was complexed.

The liquor was subsequently filtered at about 80 °C. Through extraction with toluene it was found that practically all cadmium was left behind in the filtrate.

Experiment 2

The process of experiment 1 was repeated, on the understanding that the temperature applied was 90 °C.

The results were the same as those of experiment 1.

Experiment 3

The process of experiment 1 was repeated, on the understanding

that the dithiocarbamate used was sodium diethyldithiocarbamate. The liquor took on a yellow colour and hydrogen sulphide escaped.

Through polarographic analysis it was found that there had been hardly any complexing of cadmium.

Experiment 4

The process of experiment 3 was repeated, on the understanding that the temperature of the liquid to be treated was 50 °C. The liquid showed no discolouration and no hydrogen sulphide escaped.

The results of the analysis were the same as those of experiment 1.

Experiment 5-8

The process of experiments 3 and 4 were repeated, on the understanding that the dithiocarbamate used was sodium dimethyl, respectively sodium dipropyldithiocarbamate.

The results were the same as those of experiments 3 and 4.

The above-mentioned results show that at a relatively low temperature (to about 50 °C) the aliphatic dithiocarbamates are suitable for complexing cadmium from monocalcium phosphate solutions, but decompose at higher temperatures. It is further found that in the extremely acid medium the diphenyldithiocarbamate is still stable at a temperature of 90 °C and suitable for complexing cadmium.

Example IA

8.5 grammes diphenylamine was dissolved in 18 grammes carbon disulphide. The resulting mixture was cooled on an ice bath and subsequently, during intensive stirring, a quantity of 2.1 grammes sodium amide was added slowly. The mixture was subsequently stirred for about 30 minutes more, during which stirring a solid substance crystallized out. The product crystallized out was sucked off, washed with water and subsequently recrystallized from water.

The resulting product had a melting point of 92 °C and was found on analysis to consist of more than 99 % of sodium diphenyldithiocarbamate.

Example II

Experiment 9

The process of experiment 1 was repeated, on the understanding that 5 ml of a phosphoric acid solution with a $P_2O_5$ content of 47 % (wt), containing 120 ppm metals (Hg, Cu, Cd, Zn, Ni and Fe), was added also to the solution to be treated.

On analysis it was found that practically all cadmium was complexed, but that the complex had remained in solution.

Experiment 10

The process of experiment 9 was repeated, on the understanding that 6 ml of the dithiocarbamate solution was dosed.

On analysis it was found that almost all cadmium was complexed, and that more than 70 % of the total cadmium was filtered off.

The above-mentioned experiments 9 and 10 show that coprecipitation of the complex does occur provided the quantity of ligand dosed is such that the other metals, too, are capable of complexing.

Experiment 11

25 ml of a monocalcium phosphate solution with a $P_2O_5$ content of 47 % (wt), a pH of about 1 and a temperature of 80 °C, containing about 20 ppm Hg, 20 ppm Cu, 20 ppm Cd, 20 ppm Zn, 20 ppm Ni and 20 ppm Fe, was treated in the manner described in experiment 1.

On analysis it was found that, although the quantity of diphenyldithiocarbamate was insufficient to catch all metals, about 70 % of the cadmium had been caught.

Example III

Experiment 12

The process of experiment 1 was repeated on the understanding that 2 ml of a 1 % (wt) aqueous suspension of a dithiooxalate polymer prepared according to the process described in Example IIIA was added to the liquor as well.

On analysis it was found that more than 70 % of the cadmium had been caught.

Experiment 13

The process of experiment 12 was repeated, on the

understanding that 5 ml of a metals-containing phosphoric acid solution as described in experiment 9 was also added to the liquid to be treated.

On analysis it was found that about 70 % of the total cadmium content had been caught.

Example IIIA

1 mole dry oxalylchloride was cooled and subsequently 2 moles thiophenol was slowly added in drops. After some time a yellow precipitate crystallized out, which was filtered off and recrystallized from ethanol. The sulphur yellow product (melting point 119-120 °C) was found to consist of S,S'-diphenyl-1,2-dithiooxalate. To this a stoechiometric quantity potassium hydrosulphide dissolved in water was added, during which addition potassium dithiooxalate crystallized out. The product was washed with ethanol, subsequently dissolved in water and polymerized by oxydation with an excess of a 3 % (wt) $H_2O_2$ solution.

Example IV

Experiment 14

The process of experiment 1 was repeated, on the understanding that 2 ml of a 1 % (wt) aqueous solution of potassium permanganate, too, was added to the liquor. The solution showed a discolouration from light brown, via blue and dark green, to deep brown. Using infrared spectroscopy, it could be shown that the diphenyldithiocarbamate had been converted into diphenylthiuramdisulphide.

On analysis it was found that more than 70 % of the cadmium had been caught.

Example V

Experiment 15

60 mg solid sodium diphenyldithiocarbamate was added, during stirring, to 50 ml of a monocalcium phosphate solution with a $P_2O_5$ content of 47 % (wt), a pH of 1 and a temperature of about 90 °C, containing 60 ppm Cd.

After 0,5 hour the liquor was filtered and the filter cake extracted with toluene.

On analysis it was found that about 10 % of the cadmium has been caught.

Experiment 16

The process of experiment 15 was repeated, on the understanding that in order to prevent oxidation of the dithiocarbamate, 1 ml of 1 % (wt) aqueous solution of oxalic acid was added as well.

On analysis it was found that 25 % of the cadmium has been caught.

Experiment 17

The process of experiment 15 was repeated, on the understanding that 60 mg solid calcium diphenyldithiocarbamate was added.

The quantity of cadmium caught was now 70 %.

Experiment 18

The process of experiment 15 was repeated using 60 mg solid barium diphenyldithiocarbamate. The quantity of cadmium caught was now 68 %.

Experiment 19

The process of experiment 17 was repeated starting from a monocalcium phosphate solution containing 10 ppm Cd.

The quantity of cadmium caugt was now 67 %.

Experiment 20

The process of experiment 18 was repeated starting from a monocalcium phosphate solution containing 22 ppm Cd.

The quantity of cadmium caugt was 72 %.

From the above experiments 15-20 it can be concluded that the barium and calcium salts are far less oxidation sensitive than the sodium salt, and moreover far more effective in catching cadmium.

Example VI

Experiment 21

The process of experiment 16 was repeated, on the understanding that 60 mg solid sodium-p-methyl-diphenyl-dithiocarbamate (obtained according to the process described in example VIA) was added.

The quantity of cadmium caught was now 65 %.

Experiment 22

The process of experiment 21 was repeated on the using a monocalcium phosphate solution containing 10 ppm Cd.

The quantity of cadmium caught was now 62 %.

Experiment 23

The process of experiment 16 was repeated on the understanding that 60 mg solid sodium dipyridyl-dithiocarbamate (obtained according to the process described in example VI B) was added.

The quantity of cadmium caught was now 29 %.

Example VI A

4,6 grammes p-methyl-diphenylamine was dissolved in 50 ml n-hexane, whereafter the solution was purified by passing through of nitrogen. During intensive stirring a quantity of 1.0 gram sodium amide was added slowly, whereafter the mixture was boiled for about 15 minutes under reflux cooling. After cooling the mixture 25 ml carbon disulphide was added in drops at room temperature. The reaction mixture was stirred for about 16 hours at room temperature with passing through of nitrogen, wherafter the solid substance formed was sucked off and recrystallized with ethylacetate, next with acetone and finally again from ethylacetate.

The resulting product had a melting point above about 280 °C and was found on analysis to consist of more than 85 % of sodium-p-methyl-diphenyl dithiocarbamate.

Example VI B

8,5 grammes dipyridylamine was dissolved in 50 ml boiling dioxane under reflux cooling, whereafter the solution was purified by passing through of nitrogen.

During intensive stirring 2,0 grammes sodium amide was added slowly, after which the mixture was boiled for about 2 hours under reflux cooling. Thereafter a small amount of 1, 4, 7, 10, 13, 16 hexa-oxa-cyclooctadecane was added, the mixture for about 5 hours boiled under reflux cooling, and cooled to room temperature whereafter 25 ml of carbon disulphide was added in drops. The resulting reaction mixture was

stirred at room temperature for about 16 hours with passing through of nitrogen. The product formed was sucked off and washed with dioxane.

The resulting product had a melting point above 200 °C and was found on analysis to consist of more than 90 % of sodium dipyridyldithiocarbamate.

Example VII

Experiment 24

30 mg solid sodium diphenyldithiocarbamate was added, during stirring, to 50 ml of a monocalcium phosphate solution with a $P_2O_5$ content of 47 % (wt), a pH of 1 and a temperature of about 80 °C, containing 5.3 ppm Ni, 4.0 ppm Cu, 3.68 ppm Cd, 19.8 ppm Cr, 25.2 ppm Ti, 32.2 ppm Zn and 14.5 ppm Fe. In order to prevent oxidation of the dithiocarbamate, 1 ml of 1 % (wt) aqueous solution of oxalic acid was added as well. After 1 hour the liquor was filtered and the filter cake was extracted with toluene.

On analysis it was found that 44 % of the cadmium had been caught.

Experiment 25

The process of experiment 24 was repeated, on the understanding that 50 mg solid dithiocarbamate was added. The quantity of cadmium caught was now 49 %.

Example VIII

Experiments 26 and 27

The processes of experiments 24 and 25 were repeated, on the understanding that the cadmium content of the liquor to be treated was 6 ppm.

The analytical results were the same as those of experiments 24 and 25.

Experiments 28 and 29

The process of experiments 24 and 25 were repeated on the understanding that the cadmium content of the liquid to be treated was 12.5 ppm.

The quantities of cadmium caugt were 36, respectively 38 %.

Experiment 30

The process of experiment 25 was repeated, on the understanding that 50 mg solid calcium diphenyldithiocarbamate was added and that no oxalic acid was added to the solution.

The quantity of cadmium caught was now 74 %.

Experiment 31

The process of experiment 30 was repeated using 50 mg solid barium diphenyldithiocarbamate.

The quantity of cadmium caught was 71 %.

Example IX

Experiment 32

The process of experiment 16 was repeated on the understanding that before the addition of the dithiocarbamate 1 ml of a 1 % (wt) aqueous solution of potassium iodide was added to the monocalcium phosphate solution.

The quantity of cadmium caugt was now 37 %.

Experiments 33-41

The process of experiment 32 was repeated, using varying amounts of varying inorganic salt solutions.

The results are summarized in Table I.

Table I

| exmeriment nr. | inorganic salt | concentration of salt solution (%wt) | quantity of salt solution (ml) | quantity of Cd caught (%) |
|---|---|---|---|---|
| 16 | - | - | - | 25 |
| 32 | KJ | 1 | 1 | 37 |
| 33 | $Na_2SO_3$ | 1 | 1 | 31 |
| 34 | $Na_2SO_3$ | 10 | 1 | 34 |
| 35 | $Na_2SO_3$ | 10 | 2 | 37 |
| 36 | $Na_2S_2O_3$ | 5 | 1 | 51 |
| 37 | $Na_2S_2O_3$ | 5 | 2 | 46 |
| 38 | $NH_2SO_3Na$ | 2 | 1 | 41 |
| 39 | $NH_2SO_3Na$ | 2 | 2 | 41 |
| 40 | KBr | 5 | 1 | 37 |
| 41 | KBr | 5 | 2 | 47 |

Experiment 42

1 ml of a 1 % (wt) aqueous solution of potassium bromide and 80 mg solid calcium diphenyldithiocarbamate were successively added during stirring to 50 ml of a monocalcium phosphate solution with a pH of 1, a $P_2O_5$-content of 47 % (wt) and a temperature of about 90 °C, containing 67 ppm Cd. After 0.5 hour the liquor was filtered and the filter cake extracted with toluene.

On analysis it was found that 80 % of the cadmium has been caught.

Experiment 43

The process of experiment 42 was repeated, on the understanding that 0.5 ml of an 0.5 % (wt) aqueous solution of potassium bromide was used and that the monocalcium phosphate solution contained 11 ppm Cd.

The quantity of cadmium caught was now 72 %.

Experiment 44

The process of experiment 42 was repeated using 80 mg solid

barium diphenyldithiocarbamate.

The quantity of cadmium caught was now 77 %.

Example X

Experiment 45

The process of experiment 28 was repeated, on the understanding that 100 mg solid dithiocarbamate was added in 5 portions of 20 mg.

The quantity of cadmium caught was 67 %.

Experiment 46

The process of experiment 45 was repeated on the understanding that upon each addition the liquor was filtered. After the first filtration the total quantity of cadmium caught was 50 %, after the second filtration 71 % and from the third filtration onwards 100 %.

Example XI

Experiment 47

60 mg solid sodium diphenyldithiocarbamate was added in 3 portions of 20 mg, during stirring, to 50 ml of a monocalcium phosphate solution with a $P_2O_5$ content of 47 % (wt), a pH of 1 and a temperature of 90 °C, containing 5.2 ppm Ni, 4.1 ppm Cu, 13.0 ppm Cd, 19.9 ppm Cr, 24.6 ppm Ti, 31.9 ppm Zn and 14.4 ppm Fe. After each addition the liquid was stirred for 15 minutes more and subsequently filtered, after which the filter cake was extracted with toluene. After the first filtration the quantity of cadmium caught was 86 % and after the second and the third filtration 100 %.

CLAIMS

1. Process for removing heavy metals, particularly cadmium, from acid, phosphate-containing, aqueous media by adding to these a sulphur-containing compound and separating off the heavy metal compound formed, characterized in that the heavy metals are removed from a monocalcium phosphate solution having a pH < 1, having a temperature of between 60 and 145 °C, a $P_2O_5$ content of 28-52 % (wt) and a CaO content of 3-5.5 % (wt) obtained by dissolving phosphate rock in an excess of wet-process phosphoric acid, by adding to said monocalcium phosphate solution a dithiocarbamate having the general formula:

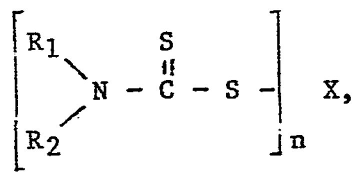

where $R_1$ and $R_2$ represent the same or different, substituted or non-substituted aromatic or heterocyclic rings, or where $R_1$ and $R_2$ form part of a ring structure together with nitrogen, X represents hydrogen, ammonium, an alkali metal or an alkaline earth metal, and n is either 1 or 2, corresponding with the valency of X, said dithiocarbamate being added in a quantity of 1-25 gram moles per gram atom of heavy metals present in said monocalcium phosphate solution, and separating off the organic heavy metal complex formed.

2. Process according to claim 1, characterized in that $R_1$ and $R_2$ both represent a phenyl group.

3. Process according to claim 1 or 2, characterized in that X represents an alkaline earth metal.

4. Process according to any one of claims 1-3, characterized in that the dithiocarbamate is added in the form of a solution, the soluble organic heavy metal complex formed is precipitated, and the resulting precipitate is separated off from the remaining monocalcium phosphate solution.

5. Process according to claim 4, characterized in that the organic heavy metal complex formed is precipitated by coprecipitation by means of a metal dithiocarbamate.

6. Process according to claim 4, characterized in that the organic heavy metal complex formed is precipitated by the addition of a

polymeric dithiooxalate having the general formula:

$$(-S-\overset{O}{\overset{\|}{C}}-\overset{O}{\overset{\|}{C}}-S-)_n,$$

where n represents a whole number higher than or equalling 3.

7. Process according to claim 4, characterized in that the organic heavy metal complex formed is precipitated by converting it into an insoluble thiuramdisulphide complex by treatment with an oxidant.

8. Process according to any one of claims 1-3, characterized in that the dithiocarbamate is added in solid form, and the organic heavy metal precipitate thus formed is separated off from the remaining monocalcium phosphate solution.

9. Process according to claim 8, characterized in that the solid dithiocarbamate is added in a plurality of steps and the precipitate formed in each step is separated off from the monocalcium phosphate solution before the next addition of dithiocarbamate taking place.

10. Process according to any one of claims 1-9, characterized in that an inorganic anion generating compound is added to the monocalcium phosphate solution to be treated before adding the dithiocarbamate to said monocalcium phosphate solution.

European Patent Office

# EUROPEAN SEARCH REPORT

0116988 Application number

EP 84 20 0135

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X,Y | CHEMICAL ABSTRACTS, vol. 81, 1974, page 328, no. 24246h, Columbus, Ohio, USA S. NISHIGAKI et al.: "DDTC-MIBK [diethyldithiocarbamate-methyl isobutyl ketone] extraction system for the simultaneous determination of heavy metals in foods by atomic absorption spectrophotometry. I. Analysis of chromium in foods containing a large amount of calcium and phosphate" & TOKYO TORITSU EISEI KENKYUSHO KENKYU NEMPO 1972, (Pub. 1973), (24), 231-237 * Abstract * --- | 1,3 | C 02 F 1/52<br>C 01 B 25/238<br>C 22 B 3/00<br>C 22 B 60/02 |
| X,Y | CHEMICAL ABSTRACTS, vol. 94, 1981, page 413, no. 163113u, Columbus, Ohio, USA NAIM A. MUMALLAH et al.: "Precipitate flotation studies with monolauryl phosphate and monolauryldithiocarbamate" & SEP. SCI. TECHNOL. 1981, 16(3), 213-228 * Abstract * --- -/- | 1,3,5 | TECHNICAL FIELDS SEARCHED (Int. Cl. 3)<br>C 01 B<br>C 02 F<br>C 22 B |

The present search report has been drawn up for all claims

| Place of search | Date of completion of the search | Examiner |
|---|---|---|
| THE HAGUE | 07-05-1984 | JACOBS J.J.E.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

European Patent Office

# EUROPEAN SEARCH REPORT

0116988
Application number
EP 84 20 0135

Page 2

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl. 3) |
| X,Y | CHEMICAL ABSTRACTS, vol. 89, 1978, page 704, no. 70286j, Columbus, Ohio, USA V.A. SELEZNEVA et al.: "Determination of copper in disubstituted calcium, strontium and barium phosphates" & METODY ANAL. LYUMIN. MATER. VESHCHESTV OSOBOI CHIST. 1976, 43-45 * Abstract * --- | 1,3,5, 8,9 | |
| Y | DE-B-1 039 238 (LICENTIA PATENT-VERWALTUNGS-GmbH) * Claims * --- | 1,3,5, 8,9 | |
| Y | US-A-2 899 451 (O.K. NEVILLE) * Claims; columns 3,4 * --- | 1-3,8, 9 | |
| A | FR-A-2 215 393 (NIPPON SODA CO., LTD.) * Claims * ----- | 1 | TECHNICAL FIELDS SEARCHED (Int. Cl. 3) |

The present search report has been drawn up for all claims

| Place of search | Date of completion of the search | Examiner |
|---|---|---|
| THE HAGUE | 07-05-1984 | JACOBS J.J.E.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82